# EUROPEAN PATENT SPECIFICATION

(11) **EP 2 613 677 B1**
(45) Date of publication and mention of the grant of the patent: **04.06.2014**
(21) Application number: 11773854.2
(22) Date of filing: 08.09.2011
(51) Int. Cl.: A47J 31/36

(54) **BEVERAGE-MAKING INFUSION UNIT**
AUFGUSSEINHEIT FÜR DIE ZUBEREITUNG VON GETRÄNKEN
UNITÉ D'INFUSION POUR LA PRÉPARATION D'UNE BOISSON

(30) Priority: 09.09.2010 IT TO20100742
(43) Date of publication of application: 17.07.2013
(73) Proprietor: SGL Italia S.r.l. con unico socio, 10156 Torino (TO) (IT)
(72) Inventor: GAMBAUDO, Mauro, 14049 Nizza Monferrato (IT)
(74) Representative: Giannini, Manuela
(86) International application number: PCT/IB2011/053927
(87) International publication number: WO 2012/032484

(56) References cited:
- EP-A1- 1 219 217
- WO-A1-2004/049878
- WO-A1-2008/004116
- WO-A2-2008/152484
- FR-A1- 2 844 441
- GB-A- 2 451 692
- US-A1- 2001 011 502
- US-A1- 2008 041 232

## Description

### TECHNICAL FIELD

The present invention relates to a beverage-making infusion unit.

More specifically, the present invention relates to an infusion unit for making a beverage from a measure of anhydrous powdered material in a container; the container comprising a package with a central portion and a peripheral portion; the unit comprising a percolating cup for housing the container, and a pressurized-hot-water dispensing unit comprising a supporting body, and a sprinkler fitted to the supporting body and having an axis; and the cup and sprinkler being movable with respect to each other between a parted position, and a fluidtight connected position in which they define a percolating chamber.

### BACKGROUND ART

In an infusion unit of the above type, the beverage is normally made by loading a fresh container into the cup in the parted position; infusing and dispensing the beverage, with the cup and sprinkler in the connected position; and, finally, unloading the used container from the cup. The container is unloaded after the cup and sprinkler return to the parted position, and may be unloaded either manually, by the user removing it from the cup, or automatically, by means of an unloading device for expelling the container from the cup, e.g. by tilting the cup. However it is done, the used container can therefore only be unloaded if it remains inside the cup when the cup and sprinkler return to the parted position at the end of the infusion stage.

In actual fact, however, this is extremely difficult to ensure when using containers in the form of a 'wafer', i.e. a package made of filter paper, with a circular outer flange. In which case, the soaked paper of the used wafer very often causes the wafer to stick to the sprinkler when the cup and sprinkler are parted, thus making it impossible to remove automatically, or difficult and dangerous to remove manually.

A common solution to the above problem is to fit the bottom of the sprinkler with an elastic member, which is compressed against the sprinkler by the wafer when the cup and sprinkler move into the connected position, and relaxes when the cup and sprinkler are parted, thus detaching the wafer from the sprinkler and keeping it inside the cup.

The elastic member normally comprises a straightforward coil spring, or a plate fitted elastically through the bottom wall of the sprinkler, or a movable central portion of the bottom wall of the sprinkler, as described, for example, in EP-A-1152678, EP-A-1477092, and WO2006/126230. The document WO 2008/004116 discloses a further example of an infusion assembly.

In actual use, all the above solutions have a common drawback : given the fragile nature of the paper when the wafer is soaked, the pressure exerted by the elastic member on the centre of the wafer to detach it from the sprinkler tends to tear the paper, especially when fine paper is used, thus resulting in failure to detach the wafer, and fallout of the powdered material contained inside it.

### DISCLOSURE OF THE INVENTION

It is an object of the present invention to provide an infusion unit of the above type, designed to provide an effective, straightforward, low-cost solution to the above drawback.

According to the present invention, there is provided a beverage-making infusion unit as claimed in Claim 1 and preferably in any one of the Claims depending directly or indirectly on Claim 1.

### BRIEF DESCRIPTION OF THE DRAWINGS

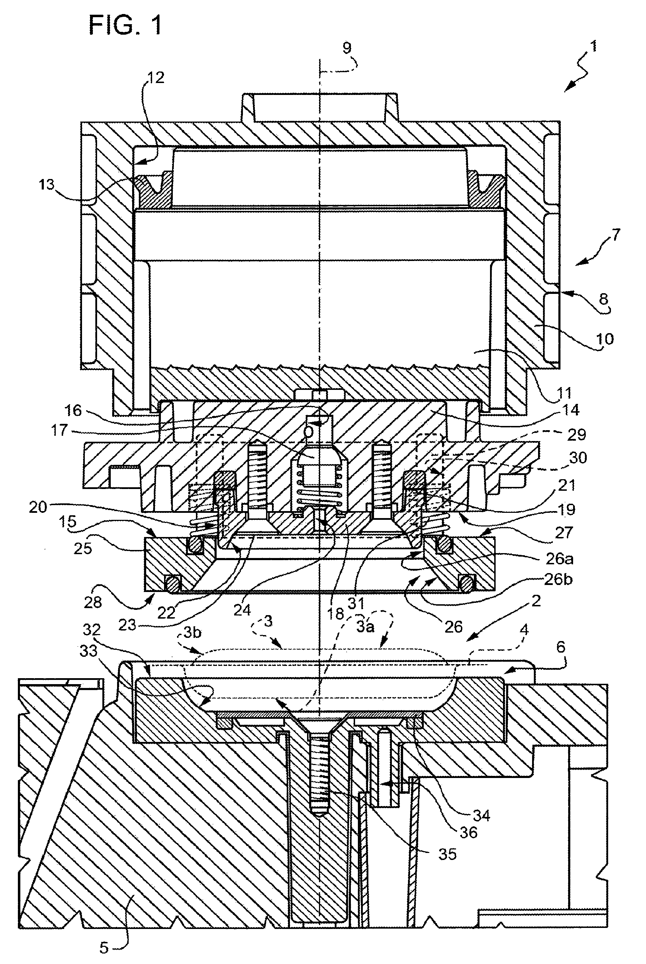

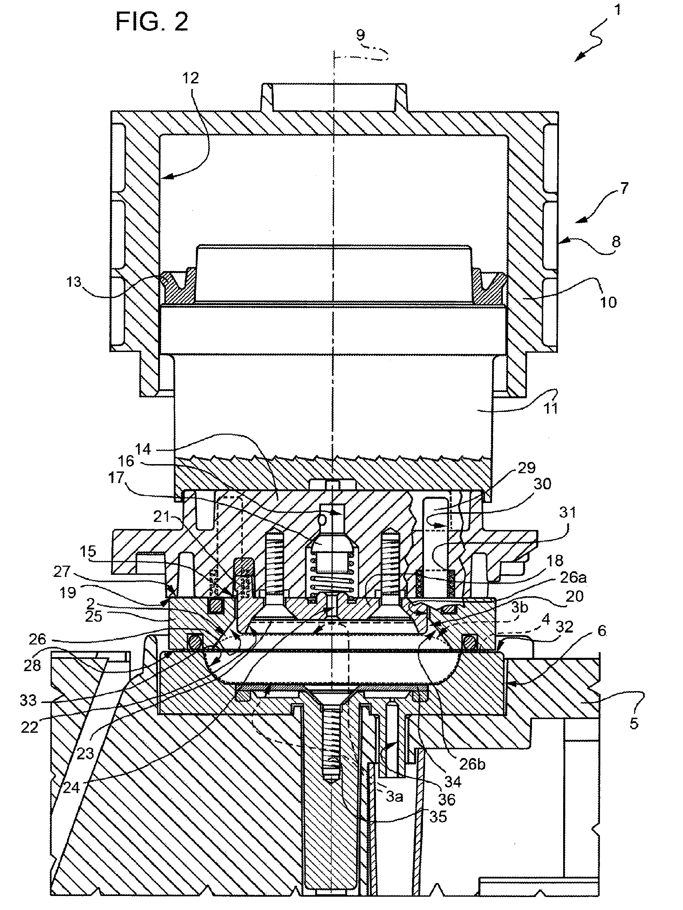

A non-limiting embodiment of the invention will be described by way of example with reference to the accompanying drawings, in which Figures 1 and 2 show axial sections, with parts removed for clarity, of a preferred embodiment of the infusion unit according to the present invention in respective operating configurations.

### BEST MODE FOR CARRYING OUT THE INVENTION

Number 1 in Figure 1 indicates as a whole an infusion unit for making a beverage from a measure of anhydrous powdered material, e.g. ground coffee, inside a container 2 defined, in the example shown, by a known wafer made of filter paper and having a package 3 comprising two opposite, flat, circular central portions 3a, a circular outer flange 4, and an annular peripheral portion 3b connecting central portions 3a to flange 4.

Unit 1 comprises a frame, in turn comprising a bottom portion 5 fitted with a percolating cup 6 for housing container 2, and a top portion (not shown) supporting a pressurized-hot-water dispensing unit 7.

More specifically, dispensing unit 7 comprises a hydraulic cylinder 8 with a vertical axis 9, and in turn comprising a tube 10, and a piston 11 mounted inside tube 10 to slide, along axis 9 and in opposition to elastic return means (not shown), from a withdrawn rest position (Figure 1) to an extracted work position (Figure 2).

Close to its axial end facing a bottom wall of tube 10, piston 11 has an annular flange, which extends radially up to tube 10, and defines, between piston 11 and the bottom wall of tube 10, a variable-volume chamber 12 sealed fluidtight by a seal 13, and which, in use, is fed with pressurized water by a conduit (not shown).

At its opposite axial end, piston 11 has an end portion, which projects axially from tube 10 and defines a supporting body 14 for a sprinkler 15, which is supplied with pressurized hot water from a boiler (not shown) by a conduit 16 formed in supporting body 14 and communicating with sprinkler 15 via a one-way valve 17 calibrated to open when conduit 16 reaches a given pressure.

Sprinkler 15 is substantially cup-shaped, and is divided into a central portion and a peripheral portion connected to each other telescopically.

More specifically, the central portion is defined by a circular plate 18, which is integral with supporting body 14, is bounded laterally by a cylindrical surface 20 coaxial with axis 9, and has an outside diameter approximating but no larger than the diameter of central portion 3a of package 3. Plate 18 is secured rigidly by screws to an end surface 19 of supporting body 14 crosswise to axis 9, and has, on the side facing supporting body 14, a number of appendixes 21 parallel to axis 9 and inserted, with the interposition of respective seals, inside respective cavities in supporting body 14.

On the side facing cup 6, plate 18 has a truncated-cone-shaped cavity 22 flaring towards cup 6, coaxial with axis 9, and fitted with a perforated filter plate 23, which covers the top of cavity 22 and separates cavity 22 from a water supply conduit 24 formed in plate 18, coaxially with axis 9, and communicating with conduit 16 via valve 17.

The peripheral portion of sprinkler 15 is defined by a tubular body 25, which has a centre hole 26 coaxial with axis 9, is bounded on the side facing supporting body 14 by a flat surface 27 parallel to surface 19, and is bounded on the side facing cup 6 by a flat surface 28 parallel to surface 27. Starting from surface 27, hole 26 comprises a cylindrical portion 26a connected slidably to cylindrical surface 20 of plate 18; and a flared portion 26b, which is equal in depth to roughly half the thickness of container 2, and has a major diameter roughly equal to the maximum diameter of package 3. Both cylindrical portion 26a and flared portion 26b are surrounded by respective annular cavities formed in respective surfaces 27 and 28 and housing respective sealing rings.

As shown in Figures 1 and 2, tubular body 25 is fitted to supporting body 14 to move, with respect to supporting body 14 and plate 18 and along axis 9, between a normal extracted position (Figure 1), in which tubular body 25 is detached from supporting body 14 and almost completely detached from plate 18, and a withdrawn position (Figure 2), in which surface 27 of tubular body 25 mates with surface 19 of supporting body 14, and plate 18 is inserted inside hole 26 through cylindrical portion 26a and part of flared portion 26b.

To permit the above movement, tubular body 25 is fitted to supporting body 14 by two pins 29, which are integral with tubular body 25, are parallel to axis 9, are located on opposite sides of axis 9, and slide axially inside respective holes 30 formed in supporting body 14.

On the side facing tubular body 25, each hole 30 has a wider portion defining a seat for a respective coil spring 31, which is coiled about respective pin 29 and compressed between supporting body 14 and surface 27 of tubular body 25 to normally keep tubular body 25 in the extracted position (Figure 1).

Pins 29 (which, in a variation not shown, may be more than two in number and equally spaced about axis 9) have an axial retainer (not shown) for preventing them from withdrawing completely from holes 30 when tubular body 25 is pushed into the extracted position by springs 31.

As shown in Figure 1, cup 6 is defined by a cup-shaped body bounded, on the side facing sprinkler 15, by a flat surface 32 crosswise to axis 9 and having a central semiellipsoidal cavity 33, which is aligned with hole 26 along axis 9, is equal in depth to roughly half the thickness of container 2, and has a maximum diameter approximating but no smaller than the maximum diameter of peripheral portion 3b of package 3.

As explained in more detail below, cavity 33 defines a bottom infusion half-chamber, which mates in fluidtight manner, with the interposition of flange 4, with a top half-chamber defined inside hole 26 by plate 18 and tubular body 25 to form a fluidtight chamber, in which to percolate the beverage, and from which the beverage flows out.

For this purpose, the bottom wall of cavity 33 is fitted by a screw 35 with a filter plate 34, which separates cavity 33 from a discharge channel 36 formed in an axial appendix of cup 6 and communicating with the outside.

Operation of unit will now be described as of the Figure 1 configuration, in which piston 11 is in the withdrawn position, sprinkler 15 and cup 6 are parted, and spring 31 holds tubular body 25 in the extracted position.

After a fresh container 2 is inserted into cavity 33 of cup 6, hydraulic cylinder 8 is operated to extract piston 11 and move sprinkler 15 towards cup 6. Before piston 11 reaches the fully extracted position, tubular body 25 impacts surface 32 of cup 6 and is pushed, by the movement of piston 11 and in opposition to springs 31, towards supporting body 14.

In the withdrawn position, tubular body 25 is pressed in fluidtight manner by piston 11 against supporting body 14 on one side, and, on the other side, against cup 6, which is thus connected to sprinkler 15 to form the percolating chamber (Figure 2), to which pressurized hot water can now be fed along conduit 16 and via one-way valve 17. As shown clearly in Figure 2, in this connected configuration, plate 18 presses on central portion 3a of package 3, tubular body 25 presses on peripheral portion 3b, and flange 4 is gripped in fluidtight manner between surfaces 28 and 32.

Once infusion is completed and the beverage dispensed, hydraulic cylinder 8 is deactivated, and piston 11 is pushed by the elastic return means (not shown) back into the withdrawn position.

As soon as piston 11 starts to withdraw, plate 18 detaches immediately from central portion 3a, and springs 31 detach tubular body 25 from supporting body 14, and keep it pressed against cup 6 and peripheral portion 3b, which thus remains inside cavity 33.

When tubular body 25 reaches the extracted position and can no longer move with respect to supporting body 14, withdrawal of piston 11 detaches tubular body 25 from cup 6 and restores sprinkler 15 to the parted position (Figure 1).

Unit 1 thus ensures the used container 2 detaches effectively, and with no tearing, from sprinkler 15, and remains inside cup 6, from which it can then be removed. This is achieved, firstly, by forming sprinkler 15 in two telescopically connected portions, to reduce sticking of the soaked paper to sprinkler 15; and, secondly, by exerting as little detachment pressure as possible on central portion 3a, which, as is known, is the most fragile part of package 3, and the part most subject to tearing when package 3 is wet and the material inside is soaked and compacted. In other words, as sprinkler 15 detaches from cup 6, the used container 2 is held inside cup 6 by tubular body 25 pressing on peripheral portion 3b, which is thicker and stronger than central portion 3a, thus enabling central portion 3a to detach smoothly and safely from plate 18.

## Claims

1. An infusion unit for making a beverage from a measure of anhydrous powdered material, the infusion unit (1) comprising a percolating cup (6) for housing a container (2) containing said measure and having a central portion (3a) and an annular peripheral portion (3b); and a pressurized-hot-water dispensing unit (7) comprising a supporting body (14), and a sprinkler (15) fitted to the supporting body (14) and having an axis (9); the cup (6) and the sprinkler (15) being movable, with respect to each other and along the axis (9), between a parted position, and a fluidtight connected position, in which the cup (6) and the sprinkler (15) define a percolating chamber; the sprinkler (15) comprising a central sprinkling body (18), which extends crosswise to said axis (9), is integral with the supporting body (14), and, in use and in the connected position, engages said central portion (3a); and a peripheral tubular body (25), which has a hole (26) coaxial with the axis (9) and connected slidably to the central sprinkling body (18), engages said peripheral portion (3b) in use and in said connected position, and is fitted to the supporting body (14) to move, with respect to the supporting body (14) and along said axis (9), between a normal extracted position, in which the tubular body (25) is detached from the supporting body (14) and at least partly detached from the central sprinkling body (18), and a withdrawn position, in which the tubular body (25) is positioned contacting the supporting body (14) and completely surrounds the central sprinkling body (18); the infusion unit (1) being **characterized in that** the hole (26) comprises a cylindrical portion (26a) engaged slidably by the central sprinkling body (18); and a flared portion (26b) flaring towards the cup (6) and defining a first percolating half-chamber with the central sprinkling body (18) when the tubular body (25) is in the withdrawn position.

2. An infusion unit as claimed in Claim 1, and comprising elastic means (31) interposed between the supporting body (14) and the tubular body (25) to normally keep the tubular body (25) in the extracted position.

3. An infusion unit as claimed in Claim 1 or 2, wherein the dispensing unit (7) comprises a hydraulic cylinder (8) coaxial with said axis (9) and in turn comprising a tube (10), and a piston (11) comprising an end portion defined at least partly by the supporting body (14); the piston (11) being movable, along the axis (9), between a withdrawn rest position, in which the tubular body (25) is in the extracted position, and an extracted work position, in which the tubular body (25) is in the withdrawn position, and is gripped in fluidtight manner between the supporting body (14) and the cup (6) by the thrust exerted by the supporting body (14).

4. An infusion unit as claimed in one of Claims 1 to 3, wherein the dispensing unit (7) comprises feed means for feeding water to the sprinkler (15), the feed means comprising a first conduit (16) formed in the supporting body (14); a second conduit (24) formed in the central sprinkling body (18) and communicating with the first conduit (16); and valve means (17) between the first and second conduit (16, 24).

5. An infusion unit as claimed in one of the foregoing Claims, wherein the cup (6) comprises a cup-shaped body with a cavity (33) defining a second percolating half-chamber, which, in the connected position, mates in fluidtight manner with the first percolating half-chamber to define a fluidtight percolating chamber.

6. An infusion unit as claimed in Claim 2, wherein pin guide means (29) are provided to guide the tubular body (25) along the axis (9).

7. An infusion unit as claimed in Claim 6, wherein said pin guide means (29) comprise at least two pins (29), which are fitted to the tubular body (25), are parallel to the axis (9), and slide inside respective seats (30) formed in the supporting body (14).

8. An infusion unit as claimed in Claim 7, wherein the elastic means (31) comprise, for each pin (29), a coil spring (31) coiled about the respective pin (29) and compressed between the supporting body (14) and the tubular body (25).

## Patentansprüche

1. Aufgusseinheit für die Zubereitung eines Getränks aus einer Menge von getrocknetem Pulvermaterial, wobei die Aufgusseinheit (1) aufweist einen Perkolierbecher (6) zur Aufnahme eines Behälters (2), der die Menge enthält und einen zentralen Abschnitt (3a) und einen ringförmigen peripheren Abschnitt (3b) besitzt; und eine Ausgabeeinheit (7) für unter Druck stehendes heißes Wasser, die einen Trägerkorpus (14) und einen Sprinkler (15), der an dem Trägerkorpus (14) angebracht ist und eine Achse (9) besitzt, aufweist; wobei der Becher (6) und der Sprinkler (15) relativ zueinander und entlang der Achse (9) bewegbar sind zwischen einer beabstandeten Position und einer fluiddicht verbundenen Position, in der der Becher (6) und der Sprinkler (15) eine Perkolierkammer festlegen; und wobei der Sprinkler (15) aufweist einen zentralen Sprinklerkorpus (18), der sich kreuzförmig zu der Achse (9) erstreckt, integral mit dem Trägerkorpus (14) ist und bei der Benutzung und in der verbundenen Position sich im Eingriff mit dem zentralen Abschnitt (3a) befindet; und einen peripheren rohrförmigen Korpus (25), der ein Loch (26) besitzt, das koaxial zu der Achse (9) und verschiebbar mit dem zentralen Sprinklerkorpus (18) verbunden ist, und sich im Eingriff mit dem peripheren Abschnitt (3b) während der Benutzung und in dem verbundenen Zustand befindet, und an dem Trägerkorpus (14) angebracht ist, um sich relativ zu dem Trägerkorpus (14) und entlang der Achse (9) zwischen einer normalen extrahierten Position, in der der rohrförmige Korpus (25) von dem Trägerkorpus (14) gelöst und zumindest teilweise von dem zentralen Sprinklerkorpus (18) gelöst ist, und einer zurückgezogenen Position, in der der rohrförmige Korpus (25) so angeordnet ist, dass er in Kontakt mit dem Trägerkorpus (14) ist und vollständig den zentralen Sprinklerkorpus (18) umgibt, zu bewegen; und wobei die Aufgusseinheit (1) **dadurch gekennzeichnet ist, dass** das Loch (26) einen zylindrischen Abschnitt (26a), der sich verschiebbar im Eingriff mit dem zentralen Sprinklerkorpus (18) befindet; und einen aufgeweiteten Abschnitt (26b), der sich zu dem Becher (6) hin aufweitet und eine erste perkolierende Halbkammer mit dem zentralen Sprinklerkorpus (18) festlegt, wenn der rohrförmige Korpus (25) sich in der zurückgezogenen Position befindet, aufweist.

2. Aufgusseinheit nach Anspruch 1, des Weiteren aufweisend ein elastisches Mittel (31), das zwischen dem Trägerkorpus (14) und dem rohrförmigen Korpus (25) angeordnet ist, um den rohrförmigen Korpus (25) normalerweise in der extrahierten Position zu halten.

3. Aufgusseinheit nach Anspruch 1 oder 2, wobei die Ausgabeeinheit (7) aufweist einen hydraulischen Zylinder (8), der koaxial zu der Achse (9) ist und der Reihe nach ein Rohr (10) und einen Kolben (11) aufweist, der einen Endabschnitt aufweist, der zumindest teilweise durch den Trägerkorpus (14) festgelegt ist; wobei der Kolben (11) entlang der Achse (9) zwischen einer zurückgezogenen Ruheposition, in der der rohrförmige Korpus (25) sich in der extrahierten Position befindet, und einer extrahierten Arbeitsposition, in der der rohrförmige Korpus (25) sich in der zurückgezogenen Position befindet und auf fluiddichte Weise zwischen dem Trägerkorpus (14) und dem Becher (16) durch den von dem Trägerkorpus (14) ausgeübten Schub gegriffen wird, bewegbar ist.

4. Aufgusseinheit nach einem der Ansprüche 1 bis 3, wobei die Ausgabeeinheit (7) ein Zuführmittel zum Zuführen von Wasser zu dem Sprinkler (15) aufweist, wobei das Zuführmittel eine erste Leitung (16), die in dem Trägerkorpus (14) gebildet ist, und eine zweite Leitung (24), die in dem zentralen Sprinklerkorpus (18) gebildet ist und in Verbindung mit der ersten Leitung (16) steht, und ein Ventilmittel (17) zwischen der ersten und der zweiten Leitung (16, 24) aufweist.

5. Aufgusseinheit nach einem der vorhergehenden Ansprüche, wobei der Becher (6) einen becherförmigen Korpus mit einem Hohlraum (33), der eine zweite perkolierende Halbkammer festlegt, die in der verbundenen Position auf fluiddichte Weise mit der ersten perkolierenden Halbkammer zusammenwirkt, um eine fluiddichte Perkolierkammer festzulegen, aufweist.

6. Aufgusseinheit nach Anspruch 2, wobei ein Stiftführungsmittel (29) vorgesehen ist, um den rohrförmigen Korpus (25) entlang der Achse (9) zu führen.

7. Aufgusseinheit nach Anspruch 6, wobei das Stiftführungsmittel (29) zumindest zwei Stifte (29) aufweist, die an dem rohrförmigen Korpus (25) angebracht sind, parallel zu der Achse (9) sind und innerhalb entsprechender Aufnahmen (30), die in dem Trägerkorpus (14) gebildet sind, gleiten.

8. Aufgusseinheit nach Anspruch 7, wobei das elastische Mittel (31) für jeden Stift (29) eine Spiralfeder (31) aufweist, die um den entsprechenden Stift (29) schraubenförmig gewickelt ist und zwischen dem Trägerkorpus (14) und dem rohrförmigen Korpus (25) komprimiert ist.

## Revendications

1. Unité d'infusion pour préparer une boisson à partir d'une dose de matière anhydre en poudre, l'unité d'infusion (1) comprenant une coupe de percolation (6) pour loger un récipient (2) contenant ladite dose et ayant une partie centrale (3a) et une partie périphérique annulaire (3b) ; et une unité de distribution d'eau chaude sous pression (7) comprenant un corps de support (14), et un pulvérisateur (15) monté sur le corps de support (14) et ayant un axe (9) ; la coupe (6) et le pulvérisateur (15) étant mobiles, l'un par rapport à l'autre et le long de l'axe (9), entre une position séparée, et une position raccordée étanche, dans laquelle la coupe (6) et le pulvérisateur (15) définissent une chambre de percolation ; le pulvérisateur (15) comprenant un corps de pulvérisation central (18) qui s'étend transversalement par rapport audit axe (9) est solidaire avec le corps de support (14), et, à l'usage et dans la position raccordée, met en prise ladite partie centrale (3a) ; et un corps tubulaire périphérique (25) qui a un trou (26) coaxial avec l'axe (9) et raccordé de manière coulissante au corps de pulvérisation central (18), met en prise ladite partie périphérique (3b) à l'usage et dans ladite position raccordée, et est monté sur le corps de support (14) pour se déplacer par rapport au corps de support (14) et le long dudit axe (9) entre une position extraite normale dans laquelle le corps tubulaire (25) est détaché du corps de support (14) et au moins partiellement détaché du corps de pulvérisation central (18) et une position retirée dans laquelle le corps tubulaire (25) est positionné en contact avec le corps de support (14) et entoure complètement le corps de pulvérisation central (18) ; l'unité d'infusion (1) étant **caractérisée en ce que** le trou (26) comprend une partie cylindrique (26a) mise en prise de manière coulissante par le corps de pulvérisation central (18) ; et une partie évasée (26b) s'évasant vers la coupe (6) et définissant une première demi-chambre de percolation avec le corps de pulvérisation central (18) lorsque le corps tubulaire (25) est dans la position retirée.

2. Unité d'infusion selon la revendication 1, et comprenant des moyens élastiques (31) intercalés entre le corps de support (14) et le corps tubulaire (25) pour maintenir normalement le corps tubulaire (25) dans la position extraite.

3. Unité d'infusion selon la revendication 1 ou 2, dans laquelle l'unité de distribution (7) comprend un cylindre hydraulique (8) coaxial avec ledit axe (9) et comprenant à son tour un tube (10) et un piston (11) comprenant une partie d'extrémité définie au moins partiellement par le corps de support (14) ; le piston (11) étant mobile le long de l'axe (9), entre une position au repos retirée dans laquelle le corps tubulaire (25) est dans la position extraite, et une position de travail extraite dans laquelle le corps tubulaire (25) est dans la position retirée et est saisi d'une manière étanche entre le corps de support (14) et la coupe (6) par la poussée exercée par le corps de support (14).

4. Unité d'infusion selon l'une des revendications 1 à 3, dans laquelle l'unité de distribution (7) comprend des moyens d'alimentation pour amener l'eau au pulvérisateur (15), les moyens d'alimentation comprenant un premier conduit (16) formé dans le corps de support (14) ; un second conduit (24) formé dans le corps de pulvérisation central (18) et communiquant avec le premier conduit (16) ; et des moyens de valve (17) entre les premier et second conduits (16, 24).

5. Unité d'infusion selon l'une des revendications précédentes, dans laquelle la coupe (6) comprend un corps en forme de coupe avec une cavité (33) définissant une seconde demi-chambre de percolation qui, dans la position raccordée, se couple de manière étanche avec la première demi-chambre de percolation afin de définir une chambre de percolation étanche.

6. Unité d'infusion selon la revendication 2, dans laquelle des moyens de guidage de broche (29) sont prévus pour guider le corps tubulaire (25) le long de l'axe (9).

7. Unité d'infusion selon la revendication 6, dans laquelle lesdits moyens de guidage de broche (29) comprennent au moins deux broches (29) qui sont montées sur le corps tubulaire (25), sont parallèles à l'axe (9) et coulissent à l'intérieur de sièges (30) respectifs formés dans le corps de support (14).

8. Unité d'infusion selon la revendication 7, dans laquelle les moyens élastiques (31) comprennent, pour chaque broche (29), un ressort hélicoïdal (31) enroulé autour de la broche (29) respective et comprimé entre le corps de support (14) et le corps tubulaire (25) .
